(19) **Europäisches Patentamt / European Patent Office / Office européen des brevets**

(11) **EP 4 345 955 A1**

(12) # EUROPEAN PATENT APPLICATION

(43) Date of publication:
**03.04.2024 Bulletin 2024/14**

(21) Application number: **23177929.9**

(22) Date of filing: **07.06.2023**

(51) International Patent Classification (IPC):
**H01M 8/0273** (2016.01)   **H01M 8/028** (2016.01)
**H01M 8/2418** (2016.01)   **H01M 8/242** (2016.01)
**H01M 8/248** (2016.01)   **H01M 8/2483** (2016.01)

(52) Cooperative Patent Classification (CPC):
**H01M 8/2418; H01M 8/0273; H01M 8/028;
H01M 8/242; H01M 8/248; H01M 8/2483**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 JP 2022147282**
**25.05.2023 JP 2023086031**

(71) Applicant: **Toshiba Energy Systems & Solutions Corporation**
**Saiwai-ku**
**Kawasaki-shi**
**Kanagawa (JP)**

(72) Inventors:
• **INUZUKA, Riko**
**Kawasaki-shi, Kanagawa (JP)**

• **OSADA, Norikazu**
**Kawasaki-shi, Kanagawa (JP)**
• **MATSUNAGA, Kentaro**
**Kawasaki-shi, Kanagawa (JP)**
• **ASAYAMA, Masahiro**
**Kawasaki-shi, Kanagawa (JP)**
• **KOBAYASHI, Shohei**
**Kawasaki-shi, Kanagawa (JP)**
• **SUZUKI, Yusuke**
**Kawasaki-shi, Kanagawa (JP)**
• **KAMEDA, Tsuneji**
**Minato-ku, Tokyo (JP)**

(74) Representative: **Hoffmann Eitle**
**Patent- und Rechtsanwälte PartmbB**
**Arabellastraße 30**
**81925 München (DE)**

(54) **ELECTROCHEMICAL DEVICE**

(57)    In an electrochemical device of an embodiment, a cell stack has a spacer disposed to be arranged next to an insulating sealing member in a direction orthogonal to a stack direction. A plurality of the spacers are arranged in the stack direction between a pair of end plates, and the spacer is interposed between a pair of separators adjacently arranged in the stack direction. The spacer is formed of a material whose thickness reduction ratio when an operation of the electrochemical device is executed is smaller than that of the insulating sealing member. Before the execution of the operation of the electrochemical device, the thickness of the spacer is thinner than the thickness of the insulating sealing member. Further, the thickness of the spacer keeps a state of being equal to or less than the thickness of the insulating sealing member when the operation of the electrochemical device is executed.

FIG.1A

EP 4 345 955 A1

# FIG.1B

K40
F2

10(14)

40

20(23)

70

50

K50

y
z → x

## Description

FIELD

Embodiments of the present invention relate to an electrochemical device.

BACKGROUND

An electrochemical device is a device related to hydrogen energy, and has an electrochemical cell configured in a manner that a hydrogen electrode (fuel electrode) and an oxygen electrode (air electrode) sandwich an electrolyte membrane.

The electrochemical cell is classified into a solid polymer one, a phosphoric acid one, a molten carbonate one, a solid oxide one, and so on, according to an operating temperature range, a composing material, and a fuel type. Among these, a solid oxide electrochemical cell is attracting attention in terms of efficiency and the like.

The solid oxide electrochemical cell uses a solid oxide as an electrolyte membrane, and it can be used as a solid oxide fuel cell (SOFC) or a solid oxide electrolysis cell (SOEC).

In a case where the solid oxide electrochemical cell is used as the SOFC, for example, hydrogen supplied to a hydrogen electrode and oxygen (including oxygen in the air) supplied to an oxygen electrode react via an electrolyte membrane under a high-temperature condition, to thereby obtain electric energy. In contrast to this, in a case where the solid oxide electrochemical cell is used as the SOEC, for example, water (water vapor) is subjected to electrolysis under a high-temperature condition, resulting in that hydrogen is generated at a hydrogen electrode, and oxygen is generated at an oxygen electrode.

Generally, an electrochemical device includes a cell stack in which a plurality of electrochemical cells are arranged in a stack direction for the purpose of improving an output, and in the cell stack, it is configured that the plurality of electrochemical cells are electrically connected in series.

[A] Electrochemical device 1

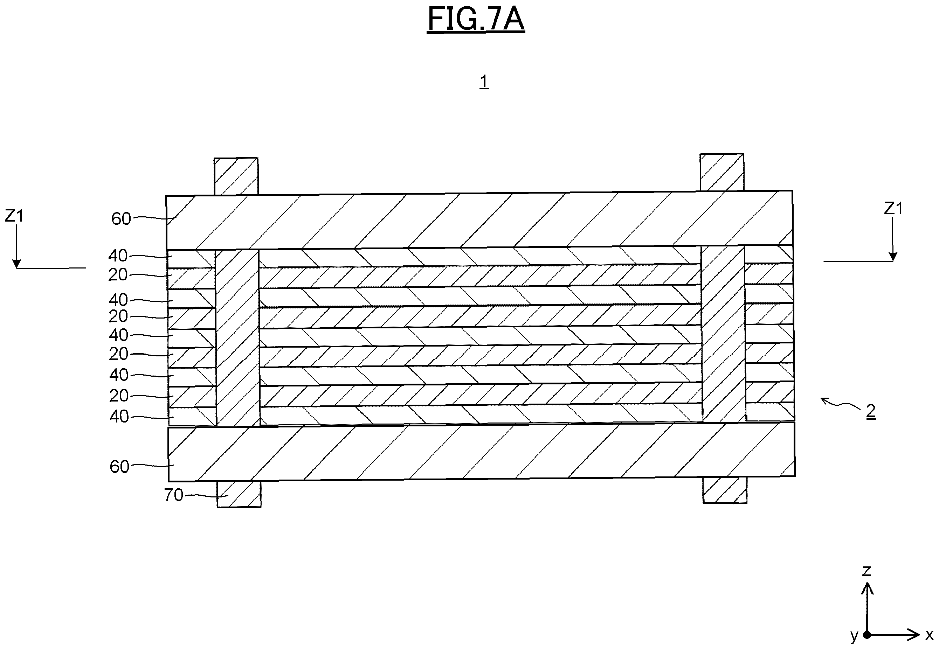

FIG. 7A is a side view schematically illustrating an example of an electrochemical device 1 according to a related art.

In FIG. 7A, a longitudinal direction is a vertical direction z, a lateral direction is a first horizontal direction x, and a direction perpendicular to the paper sheet is a second horizontal direction y orthogonal to the vertical direction z and the first horizontal direction x. FIG. 7A illustrates a side surface of the electrochemical device 1, along a vertical plane (xz plane) defined by the vertical direction z and the first horizontal direction x. In FIG. 7A, a cross section is not illustrated but hatching is applied for distinguishing respective parts.

As illustrated in FIG. 7A, the electrochemical device 1 has a cell stack 2, end plates 60, and coupling members 70.

[A-1] Cell stack 2

In the electrochemical device 1, the cell stack 2 is a stack including separators 20 and insulating sealing members 40, as illustrated in FIG. 7A. In the cell stack 2, the separator 20 and the insulating sealing member 40 are alternately stacked in a stack direction (the vertical direction z in this case) in a manner that the insulating sealing members 40 sandwich the separator 20. Here, each of the plurality of separators 20 stacked in the stack direction has the same thickness, and similarly, each of the plurality of insulating sealing members 40 stacked in the stack direction has the same thickness.

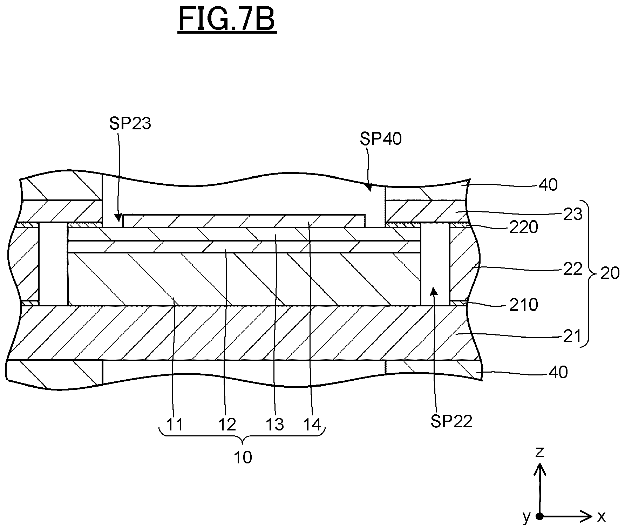

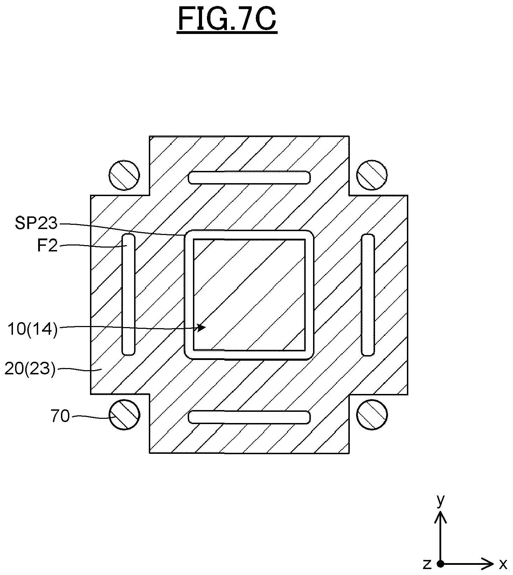

Each of FIG. 7B and FIG. 7C is a view schematically illustrating a part of the cell stack 2 configuring the electrochemical device 1 according to the related art.

FIG. 7B illustrates a cross section of the cell stack 2, along a vertical plane (xz plane) defined by the vertical direction z and the first horizontal direction x. In contrast to this, FIG. 7C illustrates a part taken along Z1-Z1 in FIG. 7A, of a cross section along a horizontal plane (xy plane) defined by the first horizontal direction x and the second horizontal direction y, of the cell stack 2 (namely, an upper surface part of the separator 20 (a third separator composing member 23)).

[A-1-1] Electrochemical cell 10

In the cell stack 2, an electrochemical cell 10 is housed inside the separator 20, as illustrated in FIG. 7B.

The electrochemical cell 10 is of a flat type having a quadrangular shape, and has a support 11, a hydrogen electrode 12, an electrolyte membrane 13, and an oxygen electrode 14. The electrochemical cell 10 is configured in a manner that the electrolyte membrane 13 is interposed between the hydrogen electrode 12 and the oxygen electrode 14, on an upper surface of the support 11. The electrochemical cell 10 is of a hydrogen electrode support type (fuel electrode support type), and is formed by sequentially stacking the hydrogen electrode 12, the electrolyte membrane 13, and the oxygen electrode 14 on the upper surface of the support 11.

In the electrochemical cell 10, the support 11 is composed of a porous electrical conductor. The hydrogen electrode 12 is composed of a porous electrical conductor, and is formed of Ni-YSZ (yttria-stabilized zirconia) or the like, for example. The electrolyte membrane 13 is denser than the hydrogen electrode 12 and the oxygen electrode 14, composed of an ion conductor that does not conduct electricity but conducts ions, and formed of, for example, stabilized zirconia or the like being a solid oxide through which oxygen ions ($O^{2-}$) permeate at an operating temperature. The oxygen electrode 14 is composed of a porous electrical conductor, and is formed of a perovskite-type oxide or the like, for example.

[A-1-2] Separator 20

In the cell stack 2, the separator 20 includes a first separator composing member 21, a second separator composing member 22, and a third separator composing member 23, as illustrated in FIG. 7B.

The separator 20 is configured by stacking the second separator composing member 22 above the first separator composing member 21, and stacking the third separator composing member 23 above the second separator composing member 22. The first separator composing member 21, the second separator composing member 22, and the third separator composing member 23 are formed of metal materials, for example. A shape of a horizontal plane of the separator 20 is a cross shape, as illustrated in FIG. 7C.

As illustrated in FIG. 7B, in the separator 20, the first separator composing member 21 is a flat plate, and at a center part of an upper surface thereof, the electrochemical cell 10 is disposed. The second separator composing member 22 has a flat plate shape and includes an inner space SP22 penetrating in the stack direction, at a center part thereof, and the inner space SP22 houses a part at which the support 11, the hydrogen electrode 12, and the electrolyte membrane 13 are stacked in the electrochemical cell 10. The third separator composing member 23 is a flat plate (partition plate) and includes an inner space SP23 penetrating in the stack direction, at a center part thereof, and the inner space SP23 houses the oxygen electrode 14 of the electrochemical cell 10.

As illustrated in FIG. 7B, a sealing material layer 210 is interposed between the first separator composing member 21 and the second separator composing member 22, and a portion between the members is sealed by the sealing material layer 210. A sealing material layer 220 is interposed between the second separator composing member 22 and the third separator composing member 23, and a portion between the members is sealed by the sealing material layer 220. The sealing material layer 220 is also interposed between the third separator composing member 23 and the electrolyte membrane 13, to thereby seal a portion therebetween. In the separator 20, the third separator composing member 23 physically isolates the inner space SP22 where the hydrogen electrode 12 exists from the inner space SP23 where the oxygen electrode 14 exists.

[A-1-3] Insulating sealing member 40

In the cell stack 2, the insulating sealing member 40 includes an inner space SP40 penetrating in the stack direction, at a center part thereof, as illustrated in FIG. 7B. The inner space SP40 of the insulating sealing member 40 is communicated with the inner space SP23 of the third separator composing member 23, and functions as a flow path of an oxygen electrode gas. Further, although an illustration is omitted, in the inner space SP40 of the insulating sealing member 40 and the inner space SP23 of the third separator composing member 23, a current collector (illustration is omitted), for example, is disposed. A plurality of electrochemical cells 10 respectively housed in a plurality of separators 20 are electrically connected in series via, for example, the current collector (illustration is omitted) and the first separator composing member 21. Although an illustration is omitted, a shape of a horizontal plane of the insulating sealing member 40 is a cross shape, similarly to the separator 20 (refer to FIG. 7C).

The insulating sealing member 40 is formed of an insulating material, and is provided for electrically insulating and for sealing between a pair of separators 20 adjacently arranged in the stack direction, and between the end plate 60 and the separator 20 arranged adjacent to the end plate 60 in the stack direction (refer to FIG. 7A).

[A-1-4] Gas flow path F2

In the cell stack 2, a gas flow path F2 is formed, as illustrated in FIG. 7C. A plurality of the gas flow paths F2 are formed so as to sandwich the electrochemical cell 10 in the first horizontal direction x and the second horizontal direction y.

Although an illustration is omitted, the gas flow path F2 is formed to penetrate the cell stack 2 in the stack direction, and functions as a flow path of a hydrogen electrode gas that flows through the hydrogen electrode 12 of the electrochemical cell 10 or a flow path of an oxygen electrode gas that flows through the oxygen electrode 14 of the electrochemical cell 10. The hydrogen electrode gas is gas used for reaction at the hydrogen electrode 12 and gas generated in the reaction at the hydrogen electrode 12, and the oxygen electrode gas is gas used for reaction at the oxygen electrode 14 and gas generated in the reaction at the oxygen electrode 14.

The gas flow path F2 that functions as the flow path of the hydrogen electrode gas, is communicated with the inner space SP23 of the separator 20 via a communication path (illustration is omitted) formed in the separator 20, for example. Similarly, the gas flow path F2 that functions as the flow path of the oxygen electrode gas, is communicated with the inner space SP23 of the separator 20 via a communication path (illustration is omitted) formed in the separator 20, for example.

[A-2] End plate 60

In the electrochemical device 1, the end plates 60 are provided as a pair, and the pair of end plates 60 are disposed so as to sandwich the cell stack 2, as illustrated in FIG. 7A. The end plate 60 is, for example, a flat plate whose planar shape is a rectangular shape.

[A-3] Coupling member 70

In the electrochemical device 1, the number of the coupling members 70 is plural as illustrated in FIG. 7A and FIG. 7C, and the coupling members 70 are disposed for coupling between the pair of end plates 60.

The coupling members 70 include male screw members (bolts or the like) being bar-shaped fastening members, for example, and fasten between the pair of end plates 60 by using the fastening members. At corner parts of the pair of end plates 60, holes (illustration is omitted) are formed, and the male screw members being the coupling members 70 are disposed to penetrate the holes formed on the pair of end plates 60. Further, to the male screw members being the coupling members 70, female screw members (illustration is omitted) such as nuts are attached, to thereby fasten between the pair of end plates 60.

Note that the coupling members 70 are not necessarily fastening members, and in that case, the pair of end plates 60 are fastened by being pressed, for example. Further, the coupling members 70 may also employ a configuration of penetrating the cell stack 2, other than the configuration of penetrating the pair of end plates 60.

[B] Problems

The insulating sealing member 40 that composes the cell stack 2 in the electrochemical device 1 is required to sufficiently keep the insulating state between the separators 20 adjacently arranged in the stack direction, and the like. At the same time, the insulating sealing member 40 is required to have a thickness that is necessary for sufficiently securing the spaces (the inner space SP40 and the inner space SP23) that function as the flow paths of the oxygen electrode gas.

In order to fulfill these requirements, a compressive sealing member made of mica or the like is used as the insulating sealing member 40. However, in order to obtain a sufficient sealing function when using the compressive sealing member as the insulating sealing member 40, it is required to apply a large load to the compressive sealing member. Consequently, a cost is increased in some cases.

In recent years, it has been proposed to use a glass sheet as the insulating sealing member 40. The glass sheet is a sheet containing a glass component and an organic binder component. In a case where the glass sheet is used as the insulating sealing member 40, a load required to obtain a sufficient sealing function is smaller (about 1/10000) than that in a case where the compressive sealing member is used as the insulating sealing member 40. For this reason, it is possible to achieve an advantage such as a reduction in cost.

However, when using the glass sheet as the insulating sealing member 40, the thickness of the insulating sealing member 40 is sometimes reduced according to operation execution of the electrochemical device 1. Concretely, when the insulating sealing member 40 of the glass sheet is subjected to initial baking processing executed by initial operation of the electrochemical device 1, the glass component in the glass sheet is baked, and the organic binder component in the glass sheet is burned to be removed. Further, at this time, the insulating sealing member 40 of the glass sheet is softened. As a result of this, the thickness of the insulating sealing member 40 formed by using the glass sheet is greatly reduced after starting the operation of the electrochemical device 1, when compared to the thickness before executing the operation (before the initial baking processing). After that, the thickness of the insulating sealing member 40 formed by using the glass sheet is gradually reduced as the operation continues.

When the thickness of the insulating sealing member 40 is reduced, the insulating state between the separators 20 adjacently arranged in the stack direction in the cell stack 2 may become insufficient, and at the same time, it becomes sometimes difficult to sufficiently secure the spaces (the inner space SP40 and the inner space SP23) that function as the flow paths of the oxygen electrode gas. Consequently, in the electrochemical device 1, a reduction in efficiency (power generation efficiency, electrolysis efficiency, and the like) is caused in some cases. In particular, when the stack direction of the cell stack 2 is along the vertical direction, a large load is applied to a lower part of the cell stack 2, and the insulating sealing member 40 is likely to become thin, so that problems as described above are likely to occur.

Also in a case where the insulating sealing member 40 is formed of a material whose thickness is reduced when the operation of the electrochemical device 1 is executed, other than the glass sheet, similar problems occur in some cases.

As described above, in the electrochemical device 1, the reduction in efficiency (power generation efficiency, electrolysis efficiency, and the like) is caused in some cases due to the reduction in thickness of the insulating sealing member 40 when the operation of the electrochemical device 1 is executed.

Therefore, the problem to be solved by the present invention is to provide an electrochemical device capable of effectively preventing the reduction in efficiency (power generation efficiency, electrolysis efficiency, and the like).

BRIEF DESCRIPTION OF THE DRAWINGS

FIG. 1A is a side view schematically illustrating an example of an electrochemical device 1 according to a first embodiment;
FIG. 1B is a view schematically illustrating a part of a cell stack 2 that configures the electrochemical device 1 according to the first embodiment;
FIG. 2 is a view schematically illustrating a part of a cell stack 2 in a modified example 1-1 of the first embodiment;

FIG. 3A is a side view schematically illustrating an example of an electrochemical device 1 according to a modified example 1-2 of the first embodiment;

FIG. 3B is a view schematically illustrating a part of a cell stack 2 in the modified example 1-2 of the first embodiment;

FIG. 4A is a side view schematically illustrating an example of an electrochemical device 1 according to a second embodiment;

FIG. 4B is a view schematically illustrating a part of a cell stack 2 that configures the electrochemical device 1 according to the second embodiment;

FIG. 5A is a side view schematically illustrating an example of an electrochemical device 1 according to a modified example 2-1 of the second embodiment;

FIG. 5B is a view schematically illustrating a part of a cell stack 2 in the modified example 2-1 of the second embodiment;

FIG. 6A is a side view schematically illustrating an example of an electrochemical device 1 according to a modified example 2-2 of the second embodiment;

FIG. 6B is a view schematically illustrating a part of a cell stack 2 in the modified example 2-2 of the second embodiment;

FIG. 7A is a side view schematically illustrating an example of an electrochemical device 1 according to a related art;

FIG. 7B is a view schematically illustrating a part of a cell stack 2 that configures the electrochemical device 1 according to the related art; and

FIG. 7C is a view schematically illustrating a part of the cell stack 2 that configures the electrochemical device 1 according to the related art.

DETAILED DESCRIPTION

An electrochemical device of an embodiment includes: a cell stack; a pair of end plates; and coupling members. The cell stack includes a separator that houses an electrochemical cell in which an electrolyte membrane is interposed between a hydrogen electrode and an oxygen electrode, and an insulating sealing member formed of an insulating material, in which the separator and the insulating sealing member are alternately stacked in a stack direction in a manner that the insulating sealing members sandwich the separator. The pair of end plates are disposed to sandwich the cell stack in the stack direction. The coupling members are provided for coupling between the pair of end plates. The insulating sealing member is formed by using a material whose thickness is reduced when an operation of the electrochemical device is executed. The cell stack has a spacer disposed to be arranged next to the insulating sealing member in a direction orthogonal to the stack direction.

A plurality of the spacers are arranged in the stack direction between the pair of end plates, and the spacer is interposed between the end plate and the separator that is arranged adjacent to the end plate in the stack direction, or between a pair of separators adjacently arranged in the stack direction. The spacer is formed of a material whose thickness reduction ratio when the operation of the electrochemical device is executed is smaller than that of the insulating sealing member. Before the execution of the operation of the electrochemical device, the thickness of the spacer is thinner than the thickness of the insulating sealing member. Further, it is configured that the thickness of the spacer keeps a state of being equal to or less than the thickness of the insulating sealing member when the operation of the electrochemical device is executed.

<First embodiment>

[A] Electrochemical device 1

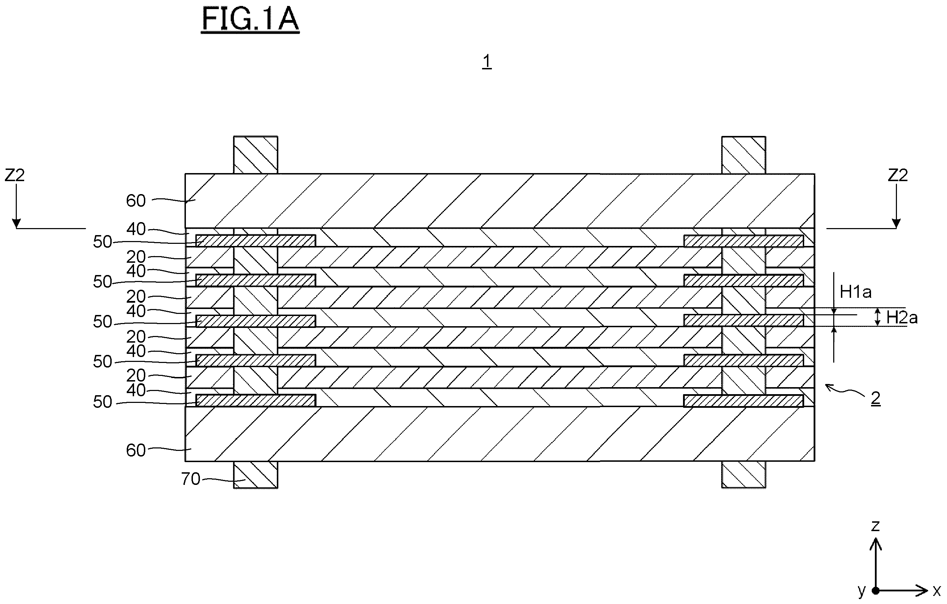

FIG. 1A is a side view schematically illustrating an example of an electrochemical device 1 according to a first embodiment. FIG. 1A illustrates a side surface of the electrochemical device 1, along a vertical plane (xz plane) defined by the vertical direction z and the first horizontal direction x, similarly to FIG. 7A.

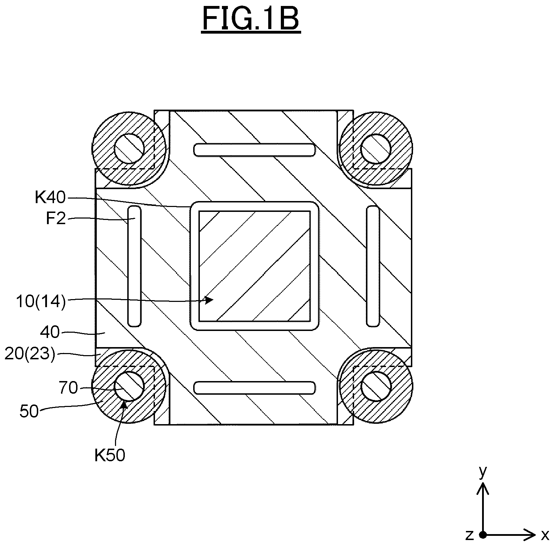

FIG. 1B is a view schematically illustrating a part of a cell stack 2 that configures the electrochemical device 1 according to the first embodiment. FIG. 1B illustrates a part taken along Z2-Z2 in FIG. 1A, of a cross section along a horizontal plane (xy plane) defined by the first horizontal direction x and the second horizontal direction y, of the cell stack 2 (namely, an upper surface part of an insulating sealing member 40).

As illustrated in FIG. 1A and FIG. 1B, the electrochemical device 1 of the present embodiment has the cell stack 2, end plates 60, and coupling members 70, similarly to the related art (refer to FIG. 7A and FIG. 7C). However, unlike the related art, the electrochemical device 1 of the present embodiment further has spacers 50. Except for this point and points related thereto, the electrochemical device 1 of the present embodiment is the same as that of the related art. For this reason, explanation of overlapped items will be omitted appropriately.

[A-1] Cell stack 2

In the cell stack 2 in the electrochemical device 1, a separator 20 and the insulating sealing member 40 are alternately stacked in a stack direction (the vertical direction z in this case) in a manner that the insulating sealing members 40 sandwich the separator 20, as illustrated in FIG. 1A.

[A-1-1] Separator 20

In the cell stack 2, the separator 20 is configured in the same manner as in the related art, and an electrochemical cell 10 is housed inside the separator 20 (refer to FIG. 7B).

[A-1-2] Insulating sealing member 40

As illustrated in FIG. 1A, in the cell stack 2, the insulating sealing member 40 electrically insulates, and seals between a pair of separators 20 adjacently arranged in the stack direction, and between the end plate 60 and the separator 20 arranged adjacent to the end plate 60 in the stack direction, in the same manner as in the related art.

The insulating sealing member 40 is formed of an insulating material. In the present embodiment, the insulating sealing member 40 is formed by using a glass sheet being a material whose thickness is reduced when an operation of the electrochemical device 1 is executed.

In the present embodiment, a horizontal plane of the insulating sealing member 40 is formed in a shape different from that of the separator 20 but a shape to expose a part of an upper surface of the separator 20, as illustrated in FIG. 1B. Concretely, the insulating sealing member 40 is configured in a manner that a part positioned in the vicinity of the coupling member 70 of the upper surface of the separator 20 is exposed, without being covered by the insulating sealing member 40.

[A-1-3] Spacer 50

In the cell stack 2, a plurality of the spacers 50 are arranged in a line in the stack direction (the vertical direction z in FIG. 1A) between the pair of end plates 60, as illustrated in FIG. 1A. Here, each of the plurality of spacers 50 is arranged with an interval between the pair of end plates 60 so as to correspond to each of the plurality of insulating sealing members 40 arranged in the stack direction.

Concretely, the spacer 50 is interposed between the end plate 60 and the separator 20 arranged adjacent to the end plate 60 in the stack direction. Further, the spacer 50 is interposed between a pair of separators 20 adjacently arranged in the stack direction.

As illustrated in FIG. 1A and FIG. 1B, the spacer 50 is a circular ring body having a through hole K50 at a center part thereof, and the bar-shaped coupling member 70 penetrates the through hole K50. The spacer 50 is supported on an upper surface of the separator 20, and disposed to be arranged next to the insulating sealing member 40 in a direction orthogonal to the stack direction (a direction along the xy plane in FIG. 1B). Here, a gap is interposed between the spacer 50 and the insulating sealing member 40.

In the present embodiment, the spacer 50 is formed by using a material whose thickness reduction ratio when the operation of the electrochemical device 1 is executed is smaller than that of the insulating sealing member 40 formed of the glass sheet, and a material having high strength and high insulating property. For example, the spacer 50 is formed by using an insulating material such as mica, alumina, or the like. In the spacer 50, a part that is not brought into contact with the separator 20 may use a conductive material such as a metal material.

In the present embodiment, before the execution of the operation of the electrochemical device 1 (in an unused state; before initial baking processing), a thickness H1a of the spacer 50 is thinner than a thickness H2a of the insulating sealing member 40 (H1a < H2a), as illustrated in FIG. 1A. Further, although an illustration is omitted, it is configured that a thickness H1b of the spacer 50 keeps a state of being equal to or less than a thickness H2b of the insulating sealing member 40 (H1b ≤ H2b) when the operation of the electrochemical device 1 is executed (after the initial baking processing).

Accordingly, in the present embodiment, even in a case where the insulating sealing member 40 is formed of a material whose thickness becomes thin in the cell stack 2, it is possible to keep a state of being equal to or more than the thickness H1b of the spacer 50 at a portion between the end plate 60 and the separator 20 adjacently arranged in the stack direction and at a portion between a pair of separators 20 adjacently arranged in the stack direction.

In the present embodiment, the thickness H1b of the spacer 50 when the operation of the electrochemical device 1 is executed (after the initial baking processing) is preferably 90% or less, for example, of the thickness H2b of the insulating sealing member 40 when the operation of the electrochemical device 1 is executed (after the initial baking processing) (namely, H1b ≤ 0.9 H2b). For example, when the thickness H2a of the insulating sealing member 40 before the initial baking processing is 1 mm, and the thickness H2b of the insulating sealing member 40 after the initial baking processing is 0.5 mm, the thickness H1b of the spacer 50 after the initial baking processing is preferably 0.45 mm or less.

When the spacer 50 is excessively thick, a load to be applied to the insulating sealing member 40 is sometimes reduced in accordance with the reduction in thickness of the insulating sealing member 40, which may cause a reduction in the sealing property of the insulating sealing member 40. When the spacer 50 is excessively thin, the insulating property of the insulating sealing member 40 is sometimes reduced and it becomes sometimes difficult to sufficiently secure the spaces (the inner space SP40 and the inner space SP23) that function as the flow paths of the oxygen electrode gas, in accordance with the reduction in thickness of the insulating sealing member 40. For this reason, the spacer 50 is set to have a thickness that satisfies the specification of the electrochemical device 1.

In the present embodiment, the above-described relationship between the insulating sealing member 40 and the spacer 50 is satisfied in all combinations between the insulating sealing members 40 and the spacers 50 arranged in the direction orthogonal to the stack direction (the direction along the xy plane in FIG. 1B).

[B] Summary

As described above, the cell stack 2 that configures the electrochemical device 1 of the present embodiment has the spacers 50. In the present embodiment, even in a case where the insulating sealing member 40 is formed of a material whose thickness becomes thin (glass sheet), the state of being equal to or more than the thickness H1b of the spacer 50 is kept at the portion between the end plate 60 and the separator 20 adjacently arranged in the stack direction and at the portion between the pair of separators 20 adjacently arranged in the stack direction, as described above. Specifically, in the present embodiment, the change in thickness of the insulating sealing member 40 is suppressed by the spacer 50. Therefore, in the present embodiment, it is possible to prevent, by the spacer 50, the sealing property and the insulating property from being reduced in the insulating sealing member 40. Consequently, in the present embodiment, it is possible to effectively prevent the occurrence of reduction in efficiency (power generation efficiency, electrolysis efficiency, and the like) in the electrochemical device 1.

Further, in the present embodiment, the spacer 50 has the through hole K50, and the bar-shaped coupling member 70 penetrates the through hole K50. Accordingly, in the present embodiment, it is easy to perform alignment of the spacer 50 when assembling the electrochemical device 1, and thus it is possible to efficiently assemble the electrochemical device 1. After assembling the electrochemical device 1, a positional displacement of the spacer 50 is unlikely to occur, so that it is possible to sufficiently secure the reliability of the electrochemical device 1.

[C] Modified examples

Hereinafter, modified examples of the above-described embodiment will be described.

[C-1] Modified example 1-1

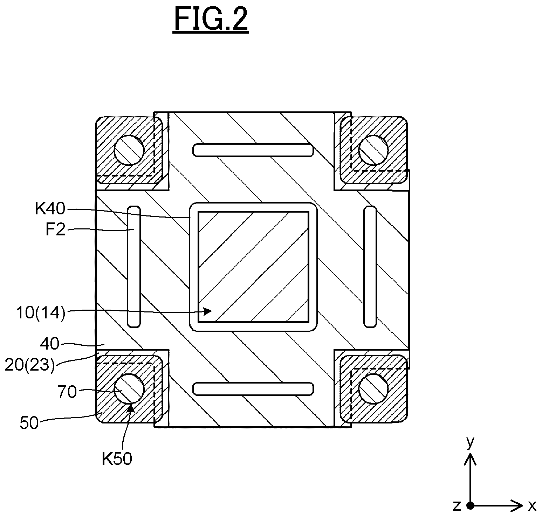

FIG. 2 is a view schematically illustrating a part of a cell stack 2 in a modified example 1-1 of the first embodiment. FIG. 2 illustrates a part taken along Z2-Z2 in FIG. 1A (namely, an upper surface part of an insulating sealing member 40), similarly to FIG. 1B.

As illustrated in FIG. 2, in the present modified example, a spacer 50 is different from one in the above-described embodiment (refer to FIG. 1B), and is a ring body with a quadrangular shape including sides arranged in parallel. As above, a planar shape of the spacer 50 can employ various shapes. Also in this case, the same effect as that of the above-described embodiment can be achieved.

[C-2] Modified example 1-2

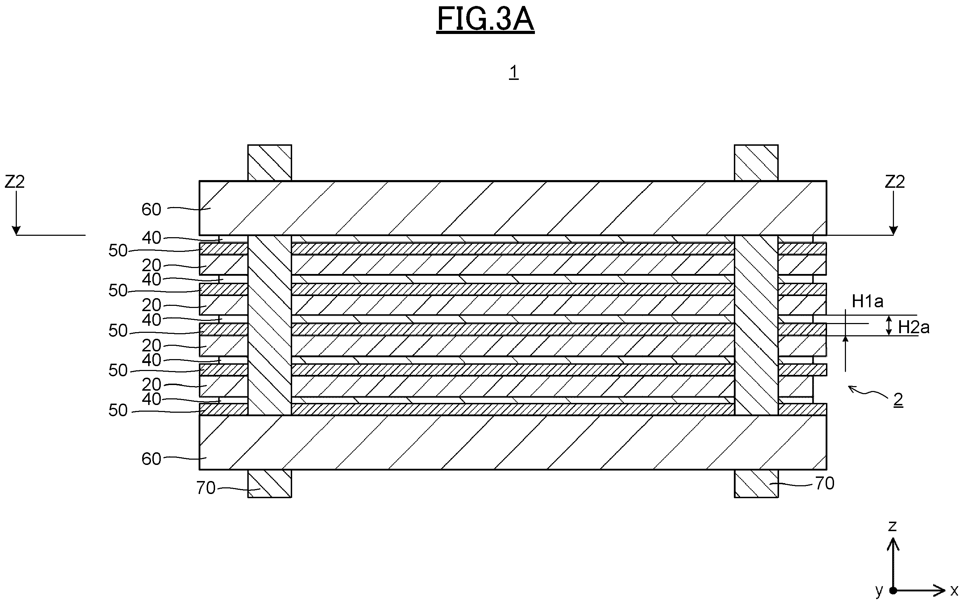

FIG. 3A is a side view schematically illustrating an example of an electrochemical device 1 according to a modified example 1-2 of the first embodiment. FIG. 3A illustrates a side surface of the electrochemical device 1, along a vertical plane (xz plane) defined by the vertical direction z and the first horizontal direction x, similarly to FIG. 1A.

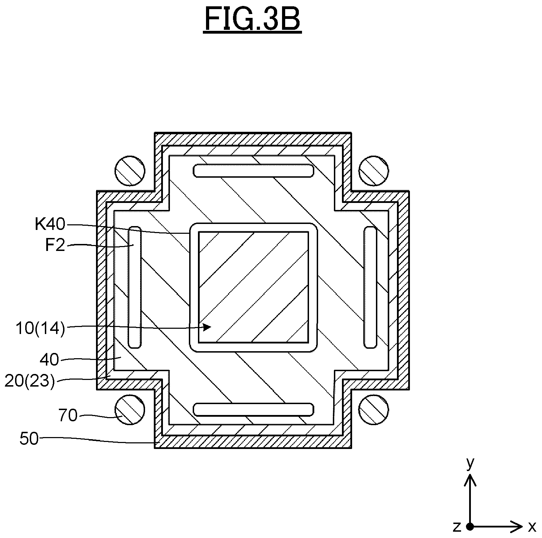

FIG. 3B is a view schematically illustrating a part of a cell stack 2 in the modified example 1-2 of the first embodiment. FIG. 3B illustrates a part taken along Z2-Z2 in FIG. 3A, of a cross section along a horizontal plane (xy plane) defined by the first horizontal direction x and the second horizontal direction y, of the cell stack 2 (namely, an upper surface part of an insulating sealing member 40).

Also in the present modified example, each of a plurality of spacers 50 is arranged between a pair of end plates 60 so as to correspond to each of a plurality of insulating sealing members 40 arranged in the stack direction, as illustrated in FIG. 3A.

However, in the present modified example, the spacer 50 is a frame body configured to surround the insulating sealing member 40, as illustrated in FIG. 3A and FIG. 3B. Here, a planar shape of the spacer 50 is a cross shape, similarly to a planar shape of the insulating sealing member 40, and the spacer 50 is configured to have a certain width of gap interposed with respect to the insulating sealing member 40. In the present modified example, a bar-shaped coupling member 70 does not penetrate the spacer 50, but the insulating sealing member 40 penetrates the inside of the spacer 50 being the frame body. Accordingly, also in the present modified example, the positioning of the spacer 50 can be easily executed, in the same manner as in the above-described embodiment, and thus it is easy to assemble the electrochemical device 1.

<Second embodiment>

[A] Electrochemical device 1

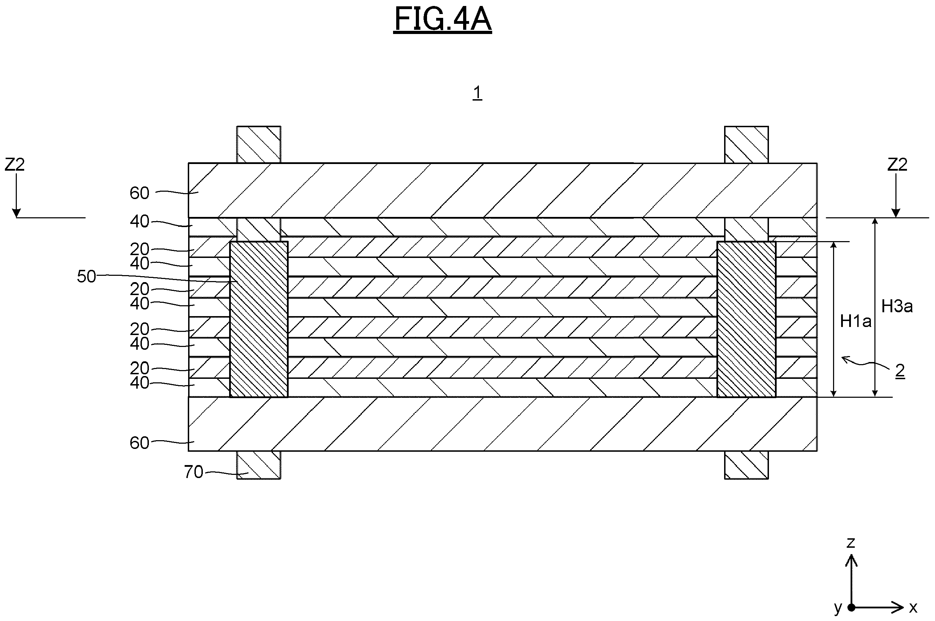

FIG. 4A is a side view schematically illustrating an example of an electrochemical device 1 according to a second embodiment. FIG. 4A illustrates a side surface of the electrochemical device 1, along a vertical plane (xz plane) defined by the vertical direction z and the first horizontal direction x, similarly to FIG. 1A.

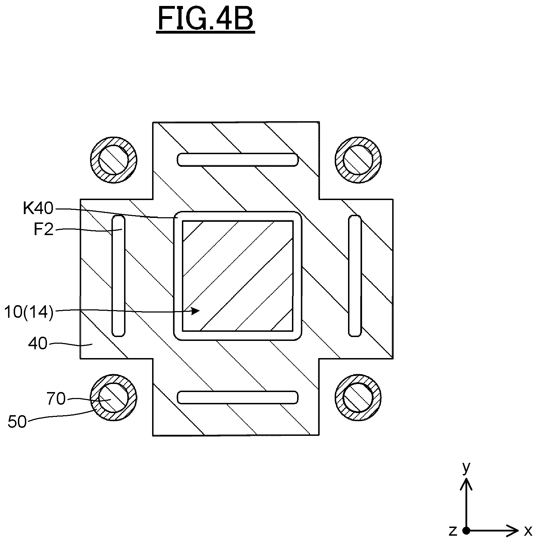

FIG. 4B is a view schematically illustrating a part of a cell stack 2 that configures the electrochemical device 1 according to the second embodiment. FIG. 4B illustrates a part taken along Z2-Z2 in FIG. 4A, of a cross section along a horizontal plane (xy plane) defined by the first horizontal direction x and the second horizontal direction y, of the cell stack 2 (namely, an upper surface part of an insulating sealing member 40).

As illustrated in FIG. 4A and FIG. 4B, the electrochemical device 1 of the present embodiment has the cell stack 2, end plates 60, coupling members 70, and spacers 50, similarly to the first embodiment (refer to FIG. 1A and FIG. 1B). However, in the electrochemical device 1 of the present embodiment, the form of the spacer 50 is different from that of the first embodiment. Except for this point and points related thereto, the electrochemical device 1 of the present embodiment is the same as that of the first embodiment. For this reason, explanation of overlapped items will be omitted appropriately.

[A-1] Cell stack 2

In the cell stack 2, a separator 20 and the insulating sealing member 40 are alternately stacked in a stack direction (the vertical direction z in this case) in a manner that the insulating sealing members 40 sandwich the separator 20, as illustrated in FIG. 4A.

[A-1-1] Separator 20

In the cell stack 2, the separator 20 is configured in the same manner as in the first embodiment, and an electrochemical cell 10 is housed inside the separator 20 (refer to FIG. 7B).

[A-1-2] Insulating sealing member 40

As illustrated in FIG. 4A, in the cell stack 2, the insulating sealing member 40 electrically insulates, and seals between a pair of separators 20 adjacently arranged in the stack direction, and between the end plate 60 and the separator 20 arranged adjacent to the end plate 60 in the stack direction, in the same manner as in the first embodiment.

The insulating sealing member 40 is formed by using a glass sheet being a material whose thickness is reduced when an operation of the electrochemical device 1 is executed, in the same manner as in the first embodiment. In the present embodiment, a horizontal plane of the insulating sealing member 40 is configured in the same shape as that of the separator 20, as illustrated in FIG. 4B.

[A-1-3] Spacer 50

In the cell stack 2, the spacer 50 is arranged between the pair of end plates 60, as illustrated in FIG. 4A.

As illustrated in FIG. 4A and FIG. 4B, the spacer 50 is a cylindrical body having a through hole K50 at a center part thereof, and the bar-shaped coupling member 70 penetrates the through hole K50. Here, unlike the first embodiment (refer to FIG. 1A) in which the plurality of spacers 50 are disposed with respect to one coupling member 70, one spacer 50 is disposed with respect to one coupling member 70. Specifically, in the present embodiment, between the pair of end plates 60, a plurality of the spacers 50 are arranged in a direction orthogonal to the stack direction (the direction along the xy plane in FIG. 4A), but in the stack direction (the vertical direction z in FIG. 4A), not a plurality of the spacers 50 but one spacer 50 is arranged.

The spacer 50 is supported on an upper surface of the end plate 60 positioned on the lower side in the stack direction, between the pair of end plates 60, as illustrated in FIG. 4A. Further, the spacer 50 is disposed to be arranged next to the insulating sealing member 40 in the direction orthogonal to the stack direction (the direction along the xy plane in FIG. 4B), as illustrated in FIG. 4B.

In the same manner as in the first embodiment, the spacer 50 is formed of a material whose thickness reduction ratio when the operation of the electrochemical device 1 is executed is smaller than that of the insulating sealing member 40. For example, the spacer 50 is formed by using an insulating material such as mica, alumina, or the like.

In the present embodiment, before the execution of the operation of the electrochemical device 1 (in an unused state; before initial baking processing), a thickness $H1a$ of the spacer 50 is thinner than a thickness $H3a$ of the cell stack 2 (namely, $H1a < H3a$), as illustrated in FIG. 4A. Further, although an illustration is omitted, it is configured that a thickness $H1b$ of the spacer 50 keeps a state of being equal to or less than a thickness $H3b$ of the cell stack 2 (namely, $H1b \leq H3b$) when the operation of the electrochemical device 1 is executed (after the initial baking processing).

Accordingly, in the present embodiment, even in a case where the insulating sealing member 40 is formed of a material whose thickness becomes thin, the thickness $H3b$ of the cell stack 2 can keep a state of being equal to or more than the thickness $H1b$ of the spacer 50. As a result of this, also in the present embodiment, it is possible to keep a state of being equal to or more than the thickness $H1b$ of the spacer 50 at a portion between the end plate 60 and the separator 20 adjacently arranged in the stack direction and at a portion between a pair of separators 20 adjacently arranged in the stack direction in the cell stack 2.

Note that in the present embodiment, the thickness $H1b$ of the spacer 50 when the operation of the electrochemical device 1 is executed (after the initial baking processing) preferably satisfies a relationship represented by the following equation. In the following equation, $H32b$ indicates a value of thickness of a plurality of insulating sealing members 40, and $H31b$ indicates a value of thickness of a part other than the plurality of insulating sealing members 40 in the cell stack 2 when the operation of the electrochemical device 1 is executed (after the initial baking processing).

$$H1b \leq 0.9 \cdot H32b + H31b$$

[B] Summary

As described above, in the cell stack 2 that configures the electrochemical device 1 of the present embodiment, the insulating sealing member 40 is formed of the material whose thickness becomes thin (glass sheet), in the same manner as in the first embodiment. In the present embodiment, also in this case, the state of being equal to or more than the thickness H1b of the spacer 50 is kept at the portion between the end plate 60 and the separator 20 adjacently arranged in the stack direction and at the portion between the pair of separators 20 adjacently arranged in the stack direction. Specifically, in the present embodiment, the change in thickness of the insulating sealing member 40 is suppressed by the spacer 50. Therefore, in the present embodiment, it is possible to prevent, by the spacer 50, the sealing property and the insulating property from being reduced in the insulating sealing member 40. Consequently, in the present embodiment, it is possible to effectively prevent the occurrence of reduction in efficiency (power generation efficiency, electrolysis efficiency, and the like) in the electrochemical device 1.

Further, in the present embodiment, the spacer 50 has the through hole K50, and the bar-shaped coupling member 70 penetrates the through hole K50, in the same manner as in the first embodiment. Accordingly, it is easy to perform alignment of the spacer 50 when assembling the electrochemical device 1. Besides, in the present embodiment, each of a plurality of spacers 50 is not disposed in the stack direction with respect to each of a plurality of insulating sealing members 40, unlike the first embodiment. The number of the spacer 50 to be disposed in the stack direction is the singular number. Therefore, in the present embodiment, it is possible to assemble the electrochemical device 1 more efficiently than the first embodiment.

[C] Modified examples

Hereinafter, modified examples of the above-described embodiment will be described.

[C-1] Modified example 2-1

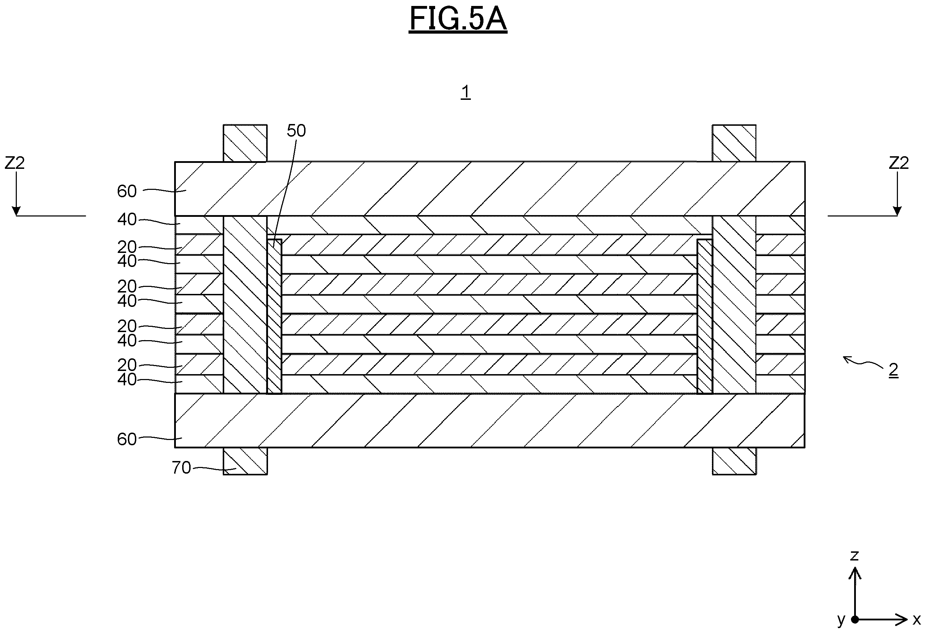

FIG. 5A is a side view schematically illustrating an example of an electrochemical device 1 according to a modified example 2-1 of the second embodiment. FIG. 5A illustrates a side surface of the electrochemical device 1, along a vertical plane (xz plane) defined by the vertical direction z and the first horizontal direction x, similarly to FIG. 4A.

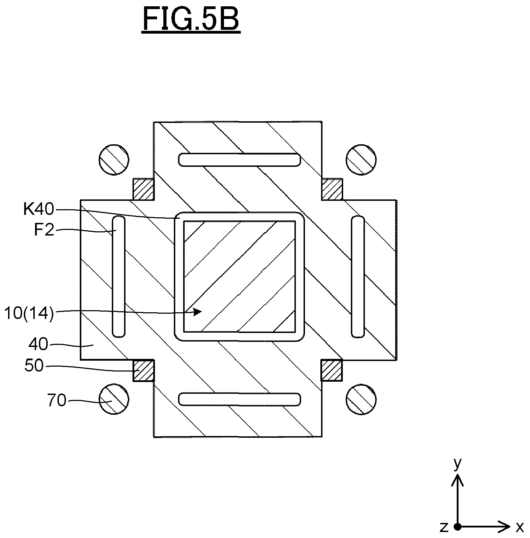

FIG. 5B is a view schematically illustrating a part of a cell stack 2 in the modified example 2-1 of the second embodiment. FIG. 5B illustrates a part taken along Z2-Z2 in FIG. 5A, of a cross section along a horizontal plane (xy plane) defined by the first horizontal direction x and the second horizontal direction y, of the cell stack 2 (namely, an upper surface part of an insulating sealing member 40).

Also in the present modified example, between a pair of end plates 60, a plurality of spacers 50 are arranged in a direction orthogonal to the stack direction (a direction along the xy plane), but in the stack direction (the vertical direction z), not a plurality of the spacers 50 but one spacer 50 is arranged, as illustrated in FIG. 5A and FIG. 5B.

However, in the present modified example, the spacer 50 is a bar-shaped body that extends in the stack direction, as illustrated in FIG. 5A and FIG. 5B. Here, the spacer 50 being the bar-shaped body is disposed to be interposed between a bar-shaped coupling member 70 and the insulating sealing members 40. As above, a shape of the spacer 50 can employ various shapes. Also in this case, the same effect as that of the above-described embodiment can be achieved.

[C-2] Modified example 2-2

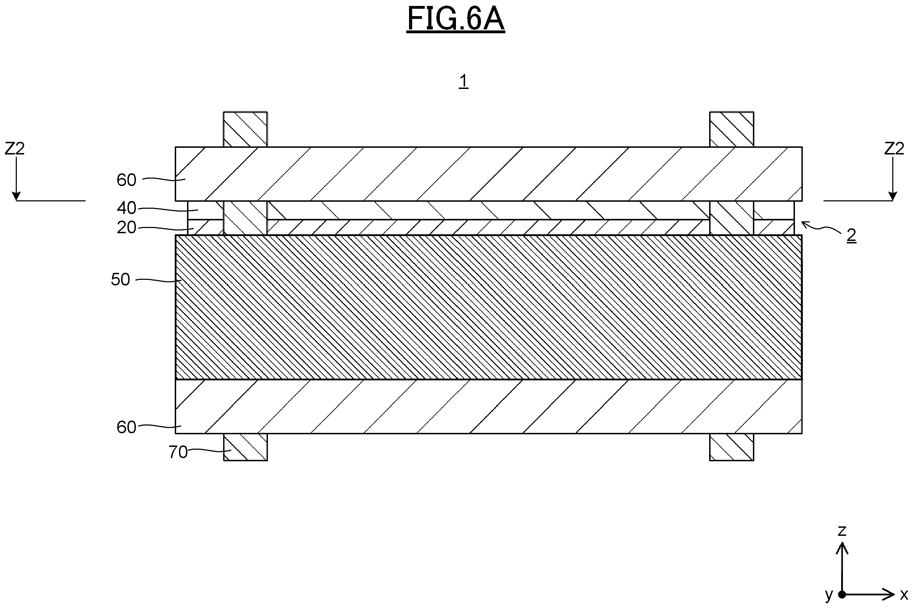

FIG. 6A is a side view schematically illustrating an example of an electrochemical device 1 according to a modified example 2-2 of the second embodiment. FIG. 6A illustrates a side surface of the electrochemical device 1, along a vertical plane (xz plane) defined by the vertical direction z and the first horizontal direction x, similarly to FIG. 4A.

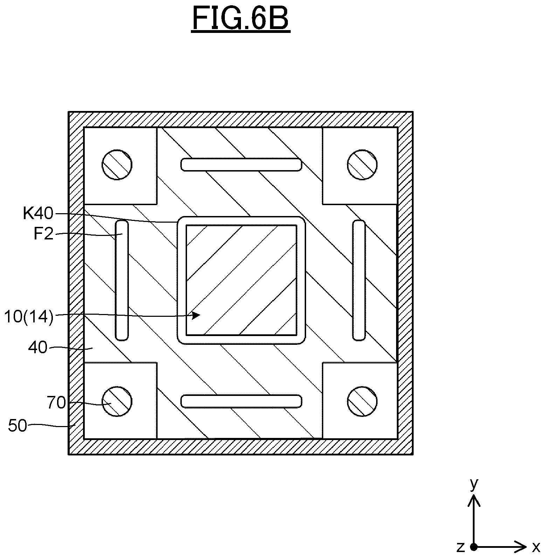

FIG. 6B is a view schematically illustrating a part of a cell stack 2 in the modified example 2-2 of the second embodiment. FIG. 6B illustrates a part taken along Z2-Z2 in FIG. 6A, of a cross section along a horizontal plane (xy plane) defined by the first horizontal direction x and the second horizontal direction y, of the cell stack 2 (namely, an upper surface part of an insulating sealing member 40).

In the present modified example, one spacer 50 is arranged between a pair of end plates 60, as illustrated in FIG. 6A and FIG. 6B.

In the present modified example, the spacer 50 is a frame body configured to surround both the insulating sealing member 40 and bar-shaped coupling members 70. As above, a shape of the spacer 50 can employ various shapes. Also in this case, the same effect as that of the above-described embodiment can be achieved.

<Others>

Although some embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

REFERENCE SIGNS LIST

1: electrochemical device, 2: cell stack, 10: electrochemical cell, 11: support, 12: hydrogen electrode, 13: electrolyte membrane, 14: oxygen electrode, 20: separator, 21: first separator composing member, 22: second separator composing member, 23: third separator composing member, 40: insulating sealing member, 50: spacer, 60: end plate, 70: coupling member, 210: sealing material layer, 220: sealing material layer, F2: gas flow path, K50: through hole, SP22: inner space, SP23: inner space, SP40: inner space

**Claims**

1. An electrochemical device, comprising:

   a cell stack including a separator that houses an electrochemical cell in which an electrolyte membrane is interposed between a hydrogen electrode and an oxygen electrode, and an insulating sealing member formed of an insulating material, the separator and the insulating sealing member being alternately stacked in a stack direction in a manner that the insulating sealing members sandwich the separator;
   a pair of end plates disposed to sandwich the cell stack in the stack direction; and
   coupling members for coupling between the pair of end plates, wherein:

   the insulating sealing member is formed by using a material whose thickness is reduced when an operation of the electrochemical device is executed; and
   the cell stack has a spacer disposed to be arranged next to the insulating sealing member in a direction orthogonal to the stack direction, wherein:

   a plurality of the spacers are arranged in the stack direction between the pair of end plates, and the spacer is interposed between the end plate and the separator that is arranged adjacent to the end plate in the stack direction, or between a pair of separators adjacently arranged in the stack direction;

   the spacer is formed of a material whose thickness reduction ratio when the operation of the electrochemical device is executed is smaller than that of the insulating sealing member;
   before the execution of the operation of the electrochemical device, the thickness of the spacer is thinner than the thickness of the insulating sealing member; and
   the thickness of the spacer is configured to keep a state of being equal to or less than the thickness of the insulating sealing member when the operation of the electrochemical device is executed.

2. The electrochemical device according to claim 1, wherein:

   the coupling member has a bar shape; and
   the spacer has a through hole through which the coupling member penetrates.

3. The electrochemical device according to claim 1, wherein
   the spacer is a frame body configured to surround the insulating sealing member.

4. An electrochemical device, comprising:

   a cell stack including a separator that houses, in an inside thereof, an electrochemical cell in which an electrolyte membrane is interposed between a hydrogen electrode and an oxygen electrode, and an insulating sealing member formed of an insulating material, the separator and the insulating sealing member being alternately stacked in a stack direction in a manner that the insulating sealing members sandwich the separator;
   a pair of end plates disposed to sandwich the cell stack in the stack direction; and
   coupling members for coupling between the pair of end plates, wherein:

   the insulating sealing member is formed by using a material whose thickness is reduced when an operation of the electrochemical device is executed; and
   the cell stack has a spacer disposed to be arranged next to the insulating sealing member in a direction orthogonal to the stack direction, wherein:

   the spacer is arranged between the pair of end plates;
   the spacer is formed of a material whose thickness reduction ratio when the operation of the electrochemical device is executed is smaller than that of the insulating sealing member;

before the execution of the operation of the electrochemical device, the thickness of the spacer is smaller than a thickness of the cell stack; and

the thickness of the spacer is configured to keep a state of being equal to or less than the thickness of the cell stack when the operation of the electrochemical device is executed.

5. The electrochemical device according to claim 4, wherein:

the coupling member has a bar shape; and
the spacer has a through hole through which the coupling member penetrates.

6. The electrochemical device according to claim 5, wherein
the spacer is a bar-shaped body that extends in the stack direction.

7. The electrochemical device according to claim 6, wherein
the spacer is a frame body configured to surround the insulating sealing member.

## FIG.1A

# FIG.1B

K40
F2
10(14)
40
20(23)
70
50
K50

y
z → x

## FIG.2

# FIG.3A

<u>1</u>

EP 4 345 955 A1

# FIG.3B

# FIG.4A

EP 4 345 955 A1

## FIG.4B

FIG.5A

EP 4 345 955 A1

FIG.5B

K40
F2
10(14)
40
50
70

# FIG.6A

FIG.6B

FIG.7A

1

EP 4 345 955 A1

FIG.7B

# FIG.7C

European Patent Office
Europäisches Patentamt
European Patent Office
Office européen des brevets

# EUROPEAN SEARCH REPORT

Application Number

**EP 23 17 7929**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 505 527 A (UNIV HUAZHONG SCIENCE TECH) 8 April 2015 (2015-04-08) * paragraphs [0040], [0041]; figures 1-3 * | 1-7 | INV.<br>H01M8/0273<br>H01M8/028<br>H01M8/2418<br>H01M8/242 |
| A | WO 2018/167845 A1 (TOSHIBA KK [JP]; TOSHIBA ENERGY SYSTEMS & SOLUTIONS CORP [JP]) 20 September 2018 (2018-09-20) * paragraphs [0030] - [0032]; figure 4 * | 1-7 | H01M8/248<br>H01M8/2483 |
| A | G BALAKRISHNAN: "Phase Transition and Thermal Expansion Studies of Alumina Thin Films Prepared by Reactive Pulsed Laser Deposition", JOURNAL OF NANOSCIENCE AND NANOTECHNOLOGY, vol. 14, no. 10, 1 October 2014 (2014-10-01), pages 7728-7733, XP055703984, DOI: 10.1166/jnn.2014.9480 * abstract * | 1-7 | |

TECHNICAL FIELDS
SEARCHED      (IPC)

**H01M**

The present search report has been drawn up for all claims

| Place of search | Date of completion of the search | Examiner |
|---|---|---|
| Munich | 5 February 2024 | Schild, Jérémy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 7929

05-02-2024

| Patent document cited in search report | | Publication date | Patent family member(s) | | Publication date |
|---|---|---|---|---|---|
| CN 104505527 | A | 08-04-2015 | NONE | | |
| WO 2018167845 | A1 | 20-09-2018 | JP | 6926193 B2 | 25-08-2021 |
| | | | JP | WO2018167845 A1 | 18-07-2019 |
| | | | WO | 2018167845 A1 | 20-09-2018 |

EPO FORM P0459